# DEMANDE DE BREVET EUROPEEN

(11) **EP 1 844 966 A1**
(43) Date de publication de la demande: **17.10.2007**
(21) Numéro de dépôt: 07300916.9
(22) Date de dépôt: 03.04.2007
(51) Int. Cl.: B60J 7/00, G02F 1/163, G01R 31/00

(54) **Dispositif et procédé de commande pour toit en verre électrochrome automobile**

(30) Priorité: 12.04.2006 FR 0603237
(71) Demandeur: RENAULT S.A.S., 92100 Boulogne Billancourt (FR)
(72) Inventeur: Bienvenu, Frederic, Mante la Ville 78711 (FR); Bardou, Gerard, Houilles 78800 (FR); Nguyen, Hoang-Giang, Ris-Orangis 91130 (FR)

(57) **Abrégé**

L'invention concerne un dispositif de commande d'un toit électrochrome et un procédé de mise en oeuvre de celui-ci. Le dispositif comprend une source d'alimentation électrique (1) en courant continu, un calculateur (2) pilotant l'alimentation électrique vers le toit électrochrome (3), et un bouton de commande (4) transmettant un signal de commande (4a) au calculateur (2), ledit calculateur (2) incluant un convertisseur (5) de courant continu en impulsions de courant piloté au moyen d'un signal de commande (4a).

Le dispositif de commande de l'invention est caractérisé en ce qu'il comprend un moyen de mesure du courant (7) en sortie du convertisseur (5) et un moyen d'affichage (8) rendant visible toute éventuelle discordance entre le signal de commande (4a) et le courant mesuré en sortie de convertisseur (5).

## Description

La présente invention concerne, de façon générale, les techniques de commande d'un toit électrochrome.

Plus précisément, l'invention concerne, selon un premier aspect, un dispositif de commande d'un toit électrochrome, ce dispositif comprenant une source d'alimentation électrique en courant continu, un calculateur pilotant l'alimentation électrique vers le toit électrochrome, et un bouton de commande transmettant un signal de commande au calculateur, le calculateur incluant un convertisseur de courant continu en impulsions de courant piloté au moyen d'un signal de commande.

Dans l'industrie automobile, de nombreuses recherches sont menées pour améliorer le confort et la sécurité du conducteur. En matière de confort il est notamment connu depuis longtemps d'utiliser un toit en verre laissant apparaître la lumière. Néanmoins, une trop forte lumière à l'intérieur de l'habitacle pouvant être dérangeante et dangereuse, des moyens ont été recherchés pour pouvoir doser la lumière reçue dans l'habitacle. Plusieurs moyens ont été proposés, en particulier l'utilisation d'un rideau pare-soleil amovible, d'une technologie à cristaux liquides (LCD, liquid cristal display) directement implantée dans le verre, ou encore d'un toit en verre électrochrome. Un toit en verre électrochrome se comporte comme un condensateur et est typiquement commandé par un dispositif électronique de commande dont la fonction consiste à appliquer au toit électrochrome une charge électrique réglable. Plus la charge appliquée au toit est élevée, et moins le toit laisse passer de lumière. Afin de piloter l'alimentation électrique du toit électrochrome, le dispositif de commande comprend un calculateur effectuant le pilotage du courant de charge. En fait, dans un souci d'économie d'énergie, un tel toit électrochrome n'est pas directement alimenté en courant continu, mais par des impulsions de courant courtes d'intensité plus élevée en intensité que le courant continu venant de la batterie du véhicule et provenant d'un convertisseur.

Le fonctionnement d'un tel toit électrochrome étant connu de l'homme du métier, il ne sera pas décrit plus en détail ici.

En cas de panne, il est très difficile, avec un tel dispositif de toit en verre électrochrome, d'identifier la source de la panne, et notamment de déterminer si elle vient du verre ou du système électronique, de sorte qu'il est nécessaire de démonter tout le système et de procéder à une vérification séparée de chaque organe.

Un but de la présente invention est donc de fournir un système permettant d'identifier l'origine d'une panne du dispositif de toit électrochrome sans avoir à démonter tout le dispositif.

A cette fin, le dispositif de commande de toit électrochrome de l'invention, par ailleurs conforme à la définition générique qu'en donne le préambule ci-dessus, est essentiellement caractérisé en ce qu'il comprend en outre au moins un moyen de mesure du courant en sortie du convertisseur et un moyen d'affichage rendant visible toute éventuelle discordance entre le signal de commande et le courant mesuré en sortie de convertisseur.

Selon un mode de réalisation de la présente invention, le moyen d'affichage est une diode électroluminescente directement implantée sur un circuit imprimé du calculateur. Ainsi, lorsqu'une panne survient dans le calculateur, le moyen de mesure envoie un signal à la diode électroluminescente afin qu'elle s'illumine. Plusieurs diodes peuvent être présentes pour un seul calculateur, chacune de ces diodes affichant l'état de marche du dispositif électronique pour un taux de transmission lumineuse prédéterminé.

Selon un autre de ses aspects, l'invention concerne un procédé de mise en oeuvre d'un dispositif de commande d'un toit électrochrome comprenant une première étape consistant, en réponse à l'actionnement d'un bouton de commande, à envoyer un signal de commande à un calculateur, et une seconde étape succédant à la première et dans laquelle un convertisseur convertit un courant continu en impulsions de courant et transmet ces impulsions vers le toit électrochrome, ce procédé étant caractérisé en ce qu'il comprend en outre une étape de diagnostic consistant à mesurer le courant en sortie du convertisseur et à envoyer un signal à un moyen d'affichage rendant visible toute éventuelle discordance entre le signal de commande et le courant mesuré en sortie de convertisseur.

Selon un mode de réalisation de cet aspect de l'invention, le procédé comprend en outre une étape dans laquelle un capteur de luminosité ambiante envoie un signal de commande au calculateur afin d'inhiber la production d'impulsions de courant vers le toit électrochrome lorsque la luminosité est inférieure à une valeur prédéterminée.

Selon un autre mode de réalisation de cet aspect de l'invention, le procédé comprend en outre une étape dans laquelle un capteur de température du toit électrochrome envoie un signal de commande au calculateur afin de piloter l'amplitude des impulsions de courant transmises au toit électrochrome.

D'autres caractéristiques et avantages de l'invention ressortiront clairement de la description qui en est faite ci-après, à titre indicatif et nullement limitatif, en référence à la figure unique qui représente schématiquement le mode de réalisation préféré d'un système de toit électrochrome selon la présente invention.

Le système de toit électrochrome illustré sur cette figure est composé d'un toit électrochrome 3 et d'un dispositif de commande qui comprend une source d'alimentation électrique 1 en courant continu, par exemple une batterie de véhicule, un calculateur 2 pilotant l'alimentation électrique provenant de la source d'alimentation électrique 1 vers le toit électrochrome 3 et un bouton de commande 4, actionné par le conducteur par exemple, transmettant un signal de commande 4a au calculateur 2.

Le calculateur 2 inclut un convertisseur 5 de courant continu en impulsions de courant et un microprocesseur 6 recevant le signal de commande 4a, émis par le bouton de commande 4, et pilotant le convertisseur 5.

Le calculateur 2 comprend également un moyen de mesure du courant 7 en sortie du convertisseur et un moyen d'affichage 8 rendant visible toute éventuelle discordance entre le signal de commande 4a et le courant mesuré en sortie du convertisseur 5, et formant ainsi un système d'autodiagnostic.

Le moyen de mesure du courant 7 peut être l'un quelconque des capteurs de courant connus de l'art antérieur. Ce moyen de mesure est préférablement disposé dans le calculateur, mais n'est nullement limité à ce cas de figure. Dans le mode de réalisation préféré de la présente invention, le moyen d'affichage 8 est une diode électroluminescente conventionnelle directement implantée sur un circuit imprimé du calculateur 2. Une telle diode est ainsi aisée à voir pour une personne chargée de la maintenance ou de la réparation du véhicule, par exemple en ouvrant une enveloppe, ou un capot, recouvrant le calculateur.

Dans la mesure où la luminosité extérieure est variable en fonction des conditions météorologiques, de l'heure ou encore de l'endroit dans lequel se trouve le véhicule, le toit électrochrome 3 a de préférence plusieurs degrés d'obscurcissement. Ces différents degrés d'obscurcissement sont représentés ici en taux de transmission de lumière. Ainsi, si aucune limitation particulière sur les différents taux de transmission de lumière accessibles par le bouton de commande n'est imposée, il est toutefois généralement préférable de rester dans une gamme de 0% à 15 %. Le bouton de commande 4 permet, par exemple, le choix entre plusieurs valeurs prédéfinies de taux de transmission de lumière. De préférence, une diode électroluminescente 8 indiquera l'état de fonctionnement pour chacun de ces taux.

Par ailleurs, le dispositif de commande de toit électrochrome comprend aussi un capteur de luminosité ambiante 9 destiné à envoyer un signal de commande 9a au calculateur 2 afin d'inhiber la production d'impulsions de courant vers le toit électrochrome 3 lorsque la luminosité est inférieure à une valeur prédéterminée. En effet, dans un souci d'économie d'énergie, un tel système permet au dispositif de ne pas fonctionner inutilement lorsque la luminosité ambiante ne l'exige pas, par exemple, lorsque le conducteur oublie d'éteindre le dispositif pendant la nuit.

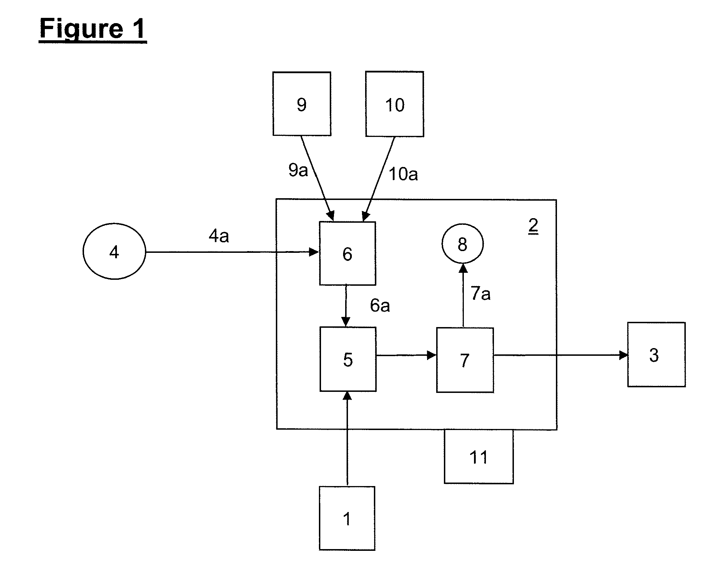

La figure 1 montre aussi la présence d'un capteur de température 10 du toit électrochrome destiné à envoyer un signal de commande 10a au calculateur 2 afin de piloter l'amplitude des impulsions de courant transmises au toit électrochrome 3. En effet, les impulsions de courant générées par le convertisseur 5 varient en fonction de divers paramètres, notamment de la température du toit électrochrome et du taux de transmission de lumière désiré. Les impulsions de courant varient en intensité en fonction de la température de toit électrochrome, de sorte qu'un toit à basse température nécessitera des impulsions d'intensité plus élevée qu'un toit à température élevée ou inversement selon la technologie des verres électrochromes. En revanche, les impulsions de courant varient en durée, par exemple 100 ms toutes les 1000 ms pour une transmission de lumière de 5 %, en fonction du taux de transmission lumineuse requis par le signal de commande 4a.

Aussi, comme représenté dans la figure 1, le calculateur 2 peut comprendre en outre une liaison multiplexée 11 avec un dispositif de diagnostic externe (non représenté). Cette liaison multiplexée est de préférence du type CAN_LSFT (Controller Area Network_Low Speed Fault Tolerence) ou du type CAN_Hight Speed, ou du type LIN (Local Interconnect Network) ou du type FLEXRAY (Bus de données haut débit automobile) ou tout autre type de liaison réseau. Ce système de diagnostic est employé en aval du système d'autodiagnostic décrit plus haut. Ce système sert aux services techniques compétents dans la prise en charge de la panne du toit électrochrome, afin de la localiser avec plus de précision.

Le dispositif représenté dans la figure 1 fonctionne comme suit. Une première étape consiste à actionner un bouton de commande 4 afin d'envoyer un signal de commande 4a, représentatif d'un taux de transmission de lumière désiré, à un calculateur 2, plus précisément à un microprocesseur 6.

Le microprocesseur 6 reçoit également des signaux 9a et 10a provenant des capteurs de luminosité 9 et de température 10, respectivement.

Puis, lors d'une seconde étape suivant la première, le microprocesseur 6, en fonction des signaux reçus et analysés, va émettre un signal de commande 6a vers le convertisseur 5 de manière que le courant continu soit converti en impulsions de courant dont la fréquence et l'intensité soient adaptés au taux requis de transmission lumineuse et à la température du toit, respectivement.

Le convertisseur 5 envoie ces impulsions vers le toit électrochrome 3 à travers un moyen de mesure du courant 7. Ce moyen de mesure 7 analyse les impulsions émises par le convertisseur et en cas de discordance entre le signal de commande 4a et le courant mesuré en sortie de convertisseur 5, envoie un signal 7a à un moyen d'affichage 8, préférablement une diode électroluminescente conventionnelle, rendant visible cette discordance.

## Revendications

1. Dispositif de commande d'un toit électrochrome, ce dispositif comprenant une source d'alimentation électrique (1) en courant continu, un calculateur (2) pilotant l'alimentation électrique vers le toit électrochrome (3), et un bouton de commande (4) transmettant un signal de commande (4a) au calculateur (2), ledit calculateur (2) incluant un convertisseur (5) de courant continu en impulsions de courant piloté au moyen d'un signal de commande (4a), **caractérisé en ce que** ledit dispositif comprend en outre au moins un moyen de mesure du courant (7) en sortie du convertisseur (5) et un moyen d'affichage (8) rendant visible toute éventuelle discordance entre le signal de commande (4a) et le courant mesuré en sortie de convertisseur (5).

2. Dispositif de commande d'un toit électrochrome selon la revendication 1, dans lequel ledit moyen d'affichage (8) est une diode électroluminescente directement implantée sur un circuit imprimé du calculateur (2).

3. Dispositif de commande d'un toit électrochrome selon la revendication 1 ou 2, comprenant en outre un capteur de luminosité (9) ambiante qui envoie un signal de commande (9a) au calculateur (2) permettant d'inhiber la production d'impulsions de courant vers le toit électrochrome (3) lorsque la luminosité est inférieure à une valeur prédéterminée.

4. Dispositif de commande d'un toit électrochrome selon l'une des revendications précédentes, comprenant en outre un capteur de température (10) du toit électrochrome qui envoie un signal de commande (10a) au calculateur (2) permettant de piloter l'amplitude des impulsions de courant transmises au toit électrochrome 3.

5. Dispositif de commande d'un toit électrochrome selon l'une des revendications précédentes, dans lequel le calculateur (2) comprend en outre une liaison multiplexée (11) avec un dispositif de diagnostic externe.

6. Dispositif de commande d'un toit électrochrome selon la revendication 5, dans lequel la liaison multiplexée (11) est du type CAN_LSFT.

7. Procédé de mise en oeuvre d'un dispositif de commande d'un toit électrochrome tel que revendiqué dans l'une quelconque des revendications 1 à 6, comprenant une première étape consistant, en réponse à l'actionnement d'un bouton de commande (4), à envoyer un signal de commande (4a) à un calculateur (2), et une seconde étape succédant à la première et dans laquelle un convertisseur (5) convertit un courant continu en impulsions de courant et transmet ces impulsions vers le toit électrochrome (3), **caractérisé en ce que** le procédé comprend en outre une étape de diagnostic consistant à mesurer le courant en sortie du convertisseur (5) et à envoyer un signal (7a) à un moyen d'affichage (8) rendant visible toute éventuelle discordance entre le signal de commande (4a) et le courant mesuré en sortie de convertisseur (5).

8. Procédé selon la revendication 7, comprenant en outre une étape dans laquelle un capteur de luminosité ambiante (9) envoie un signal de commande (9a) au calculateur (2) afin d'inhiber la production d'impulsions de courant vers le toit électrochrome (3) lorsque la luminosité est inférieure à une valeur prédéterminée.

9. Procédé selon la revendication 7 ou 8, comprenant en outre une étape dans laquelle un capteur de température (10) du toit électrochrome envoie un signal de commande (10a) au calculateur afin de piloter l'amplitude des impulsions de courant transmises au toit électrochrome (3).
